# EUROPEAN PATENT APPLICATION

(11) **EP 4 675 393 A2**
(43) Date of publication of application: **07.01.2026**
(21) Application number: 24788978.5
(22) Date of filing: 09.04.2024
(51) Int. Cl.: G06F 1/16, H01F 7/02, H02J 50/10, G06F 3/0354, G06F 3/041, G06F 11/32

(54) **ELECTRONIC APPARATUS COMPRISING COIL AND MAGNETIC MATERIAL**

(30) Priority: 10.04.2023 KR 20230046899; 03.05.2023 KR 20230057811
(71) Applicant: Samsung Electronics Co., Ltd, Suwon-si, Gyeonggi-do 16677 (KR)
(72) Inventor: SEO, Pilwon, Suwon-si, Gyeonggi-do 16677 (KR); KIM, Jeongseob, Suwon-si, Gyeonggi-do 16677 (KR); PARK, Sungwu, Suwon-si, Gyeonggi-do 16677 (KR); PARK, Seonguk, Suwon-si, Gyeonggi-do 16677 (KR); AN, Yonghee, Suwon-si, Gyeonggi-do 16677 (KR); LEE, Sangyup, Suwon-si, Gyeonggi-do 16677 (KR)
(74) Representative: Gulde & Partner
(86) International application number: PCT/KR2024/004681
(87) International publication number: WO 2024/215035

(57) **Abstract**

An electronic device according to an embodiment of the present disclosure comprises: a first housing; a second housing rotatably connected to the first housing; a first display arranged on one surface of the first housing and one surface of the second housing; a second display arranged on the other surface of the first housing; a magnetic material; and a coil, wherein the first housing may include a non-conductive region on at least a portion of a side surface of the first housing, the magnetic material and the coil may be arranged in a space surrounded by the side surface of the first housing, a first region of the first display, and a second region of the second display, and the coil may be arranged at a position overlapping the non-conductive region.

## Description

### [Technical Field]

The present disclosure relates to an electronic device comprising a coil and a magnetic material.

### [Background Art]

An electronic device (e.g., a tablet device) may include a configuration for arranging an input device (e.g., a stylus pen) used to input commands or data to the electronic device on the electronic device.

The electronic device may include a magnetic material for attaching the input device to the electronic device and a coil for transmitting power to the input device.

The electronic device may attach the input device to one surface of the electronic device using a magnet included therein. For example, an input device may be attached to one side surface of the electronic device, or an input device may be attached to a surface opposite to a surface on which the display is arranged in the electronic device.

The electronic device can transmit power to the input device attached to the electronic device using a coil. The input device can receive power from the electronic device by including a receiving coil that can receive power.

### [Disclosure of Invention]

In the case that the electronic device is a portable electronic device that can be switched into an unfolded or folded state, attaching an input device to an electronic device may be difficult when the electronic device is in a folded state. For example, in the folded state of the electronic device, the length of the one side surface of the electronic device to which the input device is attached becomes relatively short, so that it may be difficult for the input device to be stably supported by the electronic device. In addition, in the folded state of the electronic device, since the coil of the electronic device and the receiving coil of the input device are not located correspondingly to each other, it may be difficult to supply power to the input device.

An electronic device according to an embodiment of the present disclosure may include a first housing, a second housing, a first display, a second display, a magnetic material, and a coil.

In an embodiment, the second housing may be rotatably connected to the first housing about a folding axis.

In an embodiment, the first display may be arranged on one surface of the first housing and one surface of the second housing and may be foldable.

In an embodiment, the second display may be arranged on the other surface of the first housing.

In an embodiment, the magnetic material may attach an input device to an electronic device.

In an embodiment, the coil can transmit power to an input device.

In an embodiment, the first housing may include a non-conductive region on at least a portion of the side surface of the first housing perpendicular to the one surface and the other surface of the housing and formed parallel to the folding axis.

In an embodiment, the magnetic material and the coil may be arranged on the space surrounded by the side surface of the first housing, the first region of the first display, and the second region of the second display located at opposite side of the first region.

In an embodiment, the coil may be arranged in a position that overlaps the non-conductive region.

An electronic device according to an embodiment of the present disclosure may include a first housing, a second housing, a first display, a second display, an input device, a magnetic material, and a coil.

In an embodiment, the input device may be attached to a first housing.

In an embodiment, the input device may be arranged at the side surface of the first housing, the first region, or the second region.

An electronic device according to an embodiment of the present disclosure may comprise: a first housing; a second housing rotatably connected to the first housing around a folding axis; a first display arranged on one surface of the first housing and one surface of the second housing and being foldable; a second display arranged on the other surface of the first housing; an input device attached to the first housing; a magnetic material attaching the input device to the electronic device; and a coil transmitting the power to the input device, wherein the first housing may include a non-conductive region on at least a portion of a side surface of the first housing perpendicular to the one surface and the other surface of the housing and formed parallel to the folding axis, the magnetic material and the coil may be arranged in a space surrounded by the side surface of the first housing, a first region of the first display, and a second region of the second display located in the opposite side of the first region, and the coil may be arranged at a position overlapping the non-conductive region.

An electronic device according to an embodiment may provide a structure that enables attachment and charging of an input device regardless of the unfolded or folded state of the electronic device.

An electronic device according to an embodiment of the present disclosure can prevent damage to the electronic device and the input device by providing a notification to a user based on a position where an input device is attached and a folded state of the electronic device.

An electronic device according to an embodiment of the present disclosure can prevent or reduce performance degradation of the antenna by adjusting the antenna based on a position where an input device is attached.

### [Brief Description of Drawings]

FIG. 1 is a block diagram of an electronic device in a network environment according to an embodiment.
FIGS. 2a and 2b are diagrams illustrating an electronic device and an input device according to an embodiment of the present disclosure.
FIG. 3 is a diagram illustrating an input device attached to an electronic device according to an embodiment of the present disclosure.
FIG. 4 is a diagram illustrating a side surface of a first housing according to an embodiment of the present disclosure.
FIGS. 5a and 5b are diagrams illustrating an electronic device according to an embodiment of the present disclosure.
FIGS. 6a and 6b are diagrams illustrating an electronic device including a coil according to an embodiment of the present disclosure.
FIGS. 7a and 7b are diagrams illustrating a coil and an electronic device including the coil according to an embodiment of the present disclosure.
FIG. 8 is a diagram illustrating a side surface of a first housing according to an embodiment of the present disclosure.
FIGS. 9a and 9b are diagrams illustrating the electronic device 200 according to an embodiment of the present disclosure in a state where it is folded or unfolded to an angle greater than or less than a predetermined angle.
FIGS. 10a and 10b are diagrams illustrating the side surface of the first housing and the input device attached to the side surface of the first housing according to an embodiment of the present disclosure.
FIG. 11 is a flowchart of an antenna impedance change method based on the attachment of an input device according to an embodiment of the present disclosure.
FIGS. 12a and 12b are diagrams illustrating an electronic device including a connection device according to an embodiment of the present disclosure.
FIGS. 13a and 13b are diagrams illustrating an electronic device including a connection device and an input device according to an embodiment of the present disclosure.

### [Mode for the Invention]

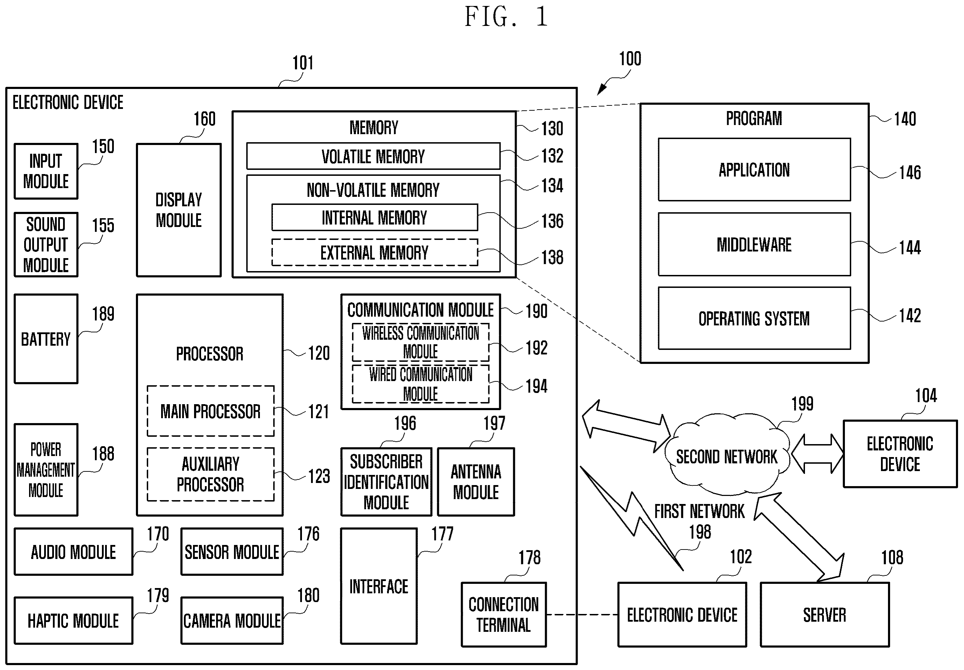

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input 1module 150, a sound output 1module 155, a display 1module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the 11connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display 1module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input 1module 150 may include, for example, a microphone, a mouse, a keyboard, a key (e.g., a button), or a digital pen (e.g., a stylus pen).

The sound output module 155 may output sound signals to the outside of the electronic device 101. The sound output 1module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 1module 160 may include, for example, a display, a hologram device, or a projector and control circuitry to control a corresponding one of the display, hologram device, and projector. According to an embodiment, the display 1module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input 1module 150, or output the sound via the sound output 1module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to one embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) there between via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

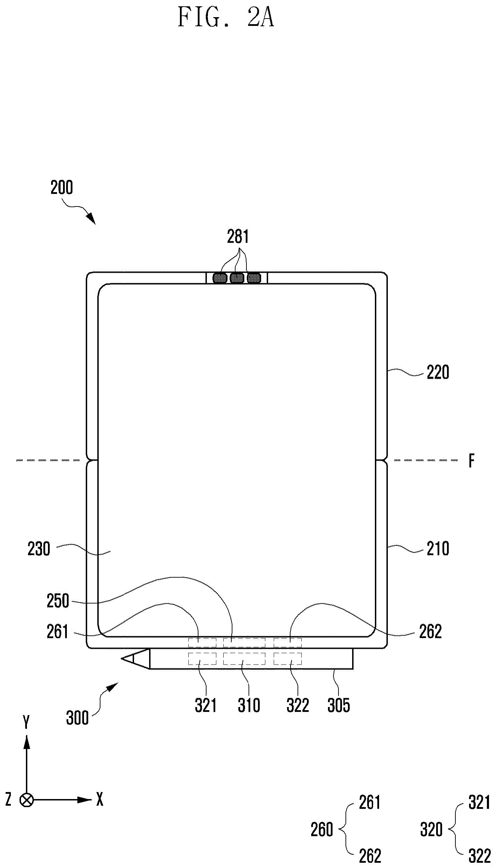

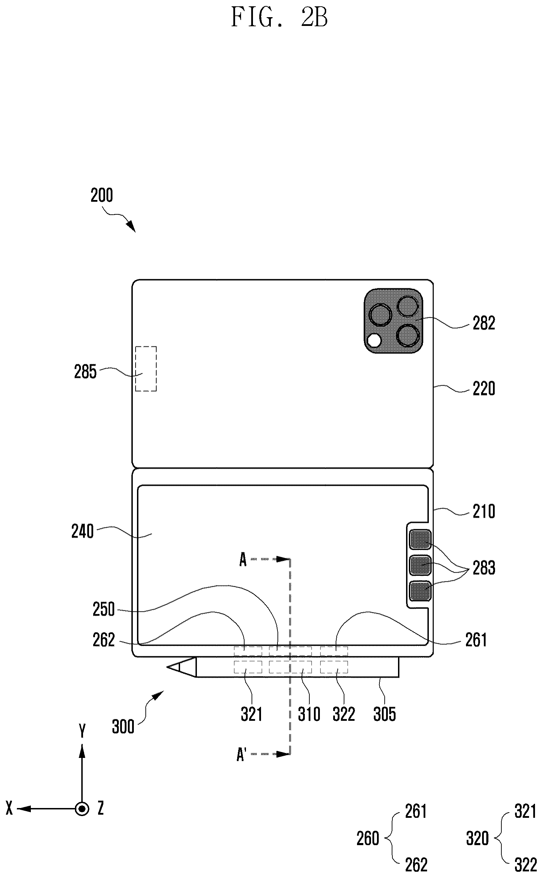

FIGS. 2a and 2b are diagrams illustrating an electronic device 200 and an input device 300 according to an embodiment of the present disclosure.

In describing an electronic device 200 according to an embodiment of the present disclosure, the width direction of the electronic device 200 means the x-axis direction, and the longitudinal direction of the electronic device 200 may mean the y-axis direction. The height direction of the electronic device 200 may mean the z-axis direction.

The electronic device 200 of FIGS. 2a and 2b may illustrate the electronic device 100 of FIG. 1, or may include at least a portion of the electronic device 200 of FIG. 1.

The electronic device 200 according to an embodiment of the present disclosure may include a first housing 210, a second housing 220, a first display 230, a second display 240, a coil 250, a magnetic material 260, a printed circuit board 270, a camera 281, 282, and 283, and/or a connection terminal 285.

In an embodiment, the first housing 210 and the second housing 220 may be rotatably connected. For example, the first housing 210 and the second housing 220 may be rotated toward or away from each other about the folding axis F.

FIGS. 2a and 2b may be diagrams illustrating an unfolded state of an electronic device 200. The unfolded state of the electronic device 200 may be the state in which the first housing 210 and the second housing 220 is not folded around the folding axis F and is arranged parallel to each other.

In an embodiment, the folded state of the electronic device 200 may be the state in which the first housing 210 and the second housing 220 are arranged to be folded around the folding axis F and overlap each other.

According to an embodiment, the first housing 210 and the second housing 220 of the electronic device 200 may be folded in an in-folding manner. The in-folding method may mean the method in which the first housing 210 and the second housing 220 is rotated around the folding axis F so that the region of the first display 230 located at the first housing 210 and the region of the first display 230 located at the second housing 220 can face each other in the folded state of the electronic device 200. When the housings 210 and 220 are folded in an in-folding manner, the display 230 may not be exposed to the outside of the electronic device 200 in a folded state of the electronic device 200.

According to an embodiment, the first housing 210 and the second housing 220 of the electronic device 200 may be folded in an out-folding manner. The out-folding method may mean the method in which the first housing 210 and the second housing 220 is rotated around the folding axis F so that the region of the first display 230 located at the first housing 210 and the region of the first display 230 located at the second housing 220 can face the outside respectively in the folded state of the electronic device 200. When the housings 210 and 220 are folded in an out-folding manner, the display 230 may be exposed to the outside of the electronic device 200 in a folded state of the electronic device 200.

In FIG. 2b, the electronic device 200 is shown to include a second display 240, but this is illustrative, and in an embodiment of the electronic device 200, the second display 240 may be omitted. For example, an electronic device 200 configured to fold in an out-folding manner may include only the first display 230 and may not include the second display 240.

With reference to FIG. 2a, the first display 230 may be arranged on one surface of the first housing 210 and one surface of the second housing 220. The one surface of the first housing 210 may be the surface facing the negative z-axis direction from the first housing 210.

With reference to FIG. 2b, the second display 240 may be arranged on the other surface of the first housing 210. The other surface of the first housing 210 may be the surface facing the positive z-axis direction from the first housing 210.

In an embodiment, the first display 230 may be a foldably flexible display. The first display 230 may fold or unfold depending on the rotation of the first housing 210 or the second housing 220.

In an embodiment, the electronic device 200 may include at least one camera 281, 282, and 283. With reference to FIG. 2a, the first camera 281 may be arranged on one surface of the second housing 220. With reference to FIG. 2b, the second camera 282 may be arranged on the other surface of the second housing 220. With reference to FIG. 2b, the third camera 283 may be arranged on the other surface of the first housing 210.

In an embodiment, the coil 250 and the magnetic material 260 may be arranged at the end portion of the electronic device 200. For example, the coil 250 and the magnetic material 260 may be arranged at the end portion of the electronic device 200 facing the negative y-axis direction.

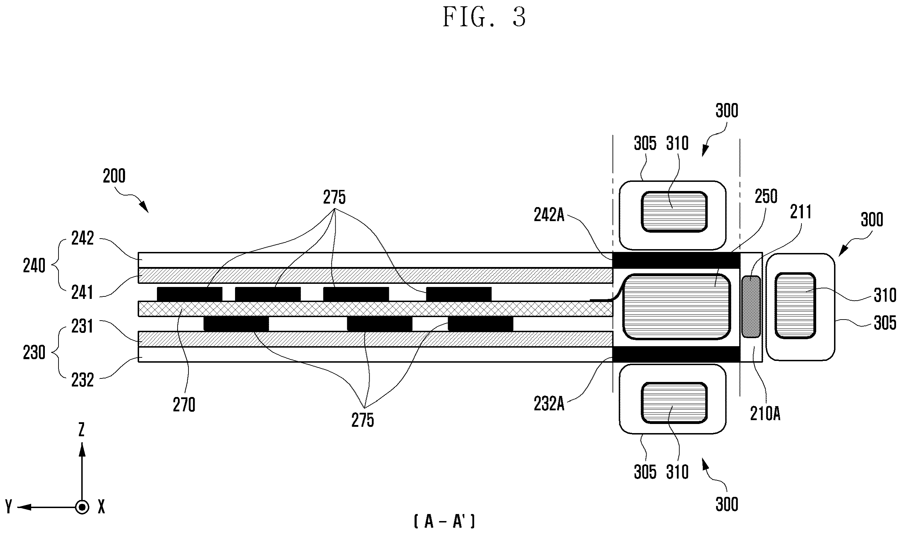

In an embodiment, at the end portion of the electronic device 200, the first display 230 and the second display 240 may include a black matrix region (e.g., the first region 232A in FIG. 3), which is an region where the screen is not displayed. The coil 250 and magnetic material 260 may be arranged in a space surrounded by the black matrix region.

In an embodiment, the coil 250 and magnetic material 260 may be arranged at a distance from the cameras 281, 282, and 283 within the electronic device 200. The coil 250 and the magnetic material 260 may be arranged at the end portion of the electronic device 200 where the first camera 281, the second camera 282, and the third camera 283 are not located.

In an embodiment, the coil 250 may serve to transmit power to a device located outside the electronic device 200. For example, the coil 250 may transmit power to an input device 300 attached to the electronic device 200.

In an embodiment, the magnetic material 260 may serve to attach the input device 300 to the electronic device 200. For example, the magnetic material 260 may attach the input device 300 to the electronic device 200 using the attractive force acting between the magnetic material 260 and the attachment magnetic material 320.

In an embodiment, the connection terminal 285 may refer to the connection terminal 178 in FIG. 1 or may include at least a portion of the connection terminal 178 in FIG. 1. The connection terminal 285 may include a connector that allows the electronic device 200 to be physically connected to an external device. For example, it may include an HDMI connector, a USB connector, an SD card connector, or an audio connector (e.g., a headphone connector).

In an embodiment, the magnetic material 260 may include a first magnetic material 261 and/or a second magnetic material 262. The first magnetic material 261 and the second magnetic material 262 may be arranged in symmetrical positions relative to the coil 250. For example, the first magnetic material 261 may be arranged at a distance from the coil 250 in one direction of the coil 250. The second magnetic material 262 may be arranged at a distance from the coil 250 in the other direction of the coil 250.

In an embodiment, the input device 300 may be attached to one side surface of the electronic device 200. One side surface of the electronic device 200 may refer to the surface facing the negative y-axis direction of the electronic device 200. One side surface of the electronic device 200 may be a surface formed parallel to the folding axis F.

In an embodiment, the length of the side surface of the electronic device 200 to which the input device 300 is attached, extending in the width direction (e.g., x-axis direction) of the electronic device 200, may be formed longer than the length of the input device 300. Since the side surface of the electronic device 200 extends longer than the input device 300, the input device 300 can be stably supported on the side surface of the electronic device 200.

In an embodiment, the input device 300 may be a device that allows a user of the electronic device 200 to input commands or data to the electronic device 200. For example, the input device 300 may be a digital pen. The input device 300 may be a digital pen in the form of a stylus pen.

In an embodiment, the input device 300 may include an input housing 305, a receiving coil 310, and/or an attachment magnetic material 320.

In an embodiment, the input housing 305 may form the exterior of the input device 300. The receiving coil 310 and the attachment magnetic material 320 may be arranged inside the input housing 305. The receiving coil 310 and the attachment magnetic material 320 may be surrounded by the input housing 305.

In an embodiment, when a user of the electronic device 200 uses the input device 300 to input commands or data to the electronic device 200, at least a portion of the input housing 305 may come into contact with the electronic device 200.

In an embodiment, the input device 300 may receive power from the coil 250 of the electronic device 200 through the receiving coil 310.

In an embodiment, the input device 300 may include at least one attachment magnetic material 320. For example, the attachment magnetic material 320 may include a first attachment magnetic material 321 and/or a second attachment magnetic material 322. The first attachment magnetic material 321 and the second attachment magnetic material 322 may be arranged symmetrically relative to the receiving coil 310 within the input device 300.

In an embodiment, the input device 300 may be arranged on one side surface of the electronic device 200 such that the attachment magnetic material 320 is located in correspondence with the magnetic material 260 of the electronic device 200. For example, the attachment magnetic material 320 of the input device 300 may be arranged substantially at the same position as the magnetic material 260 of the electronic device 200 based on the width direction (e.g., the x-axis direction) of the electronic device 200. In an embodiment, depending on the direction in which the input device 300 is arranged, the first magnetic material 261 may be arranged at a position corresponding to the first attachment magnetic material 321 or the second attachment magnetic material 322.

In an embodiment, the input device 300 may be attached to the electronic device 200 through the attractive force acting between the magnetic material 260 and the attachment magnetic material 320.

FIG. 3 is a diagram illustrating an input device 300 arranged on an electronic device 200 according to an embodiment of the present disclosure.

FIG. 3 may be a diagram illustrating the electronic device 200 as viewed from the A-A' cross-section shown in FIG. 2b.

In an embodiment, the electronic device 200 may include a printed circuit board 270 and/or at least one electronic component 275.

In an embodiment, at least one electronic component 275 may be arranged on the printed circuit board 270.

In an embodiment, the first display 230 and the second display 240 of the electronic device 200 may be arranged to face opposite directions. For example, with reference to FIG. 3, the first display 230 may be arranged to face the negative z-axis direction, and the second display 240 may be arranged to face the positive z-axis direction.

In an embodiment, the printed circuit board 270 and the electronic component 275 of the electronic device 200 may be arranged in the space formed between the first display 230 and the second display 240.

FIG. 3 illustrates only the side surface 210A of the first housing 210, but this may be an illustrative example for explanatory purposes. For example, FIG. 3 may be a diagram illustrating a state where some surfaces of the housing 210 are omitted. FIG. 3 may be a diagram in which one surface of the housing 210 where the first display 230 is arranged and the other surface of the housing 210 where the second display 240 is arranged are omitted.

In an embodiment, the first display 230 may include a first panel 231 and/or a first window 232. The first window 232 may be arranged in the direction facing the exterior of the electronic device 200 relative to the first panel 231 (e.g., the negative z-axis direction).

In an embodiment, the second display 240 may include a second panel 241 and/or a second window 242. The second window 242 may be arranged in a direction facing the exterior of the electronic device 200 relative to the second panel 241 (e.g., the positive z-axis direction).

In an embodiment, the first panel 231 and the second panel 241 may serve to display a screen on the display 230 and 240 of the electronic device 200. The first panel 231 and the second panel 241 may include multiple pixels for screen display.

In an embodiment, the first window 232 and the second window 242 may each serve to protect the first panel 231 and the second panel 241, respectively. The first window 232 and the second window 242 may include a glass layer, UTG (ultra-thin glass), and/or a polymer.

In an embodiment, the first display 230 may include a first region 232A. For example, the first region 232A may be formed at one end of the first window 232 (e.g., the end of the first window 232 facing the negative y-axis direction).

In an embodiment, the second display 240 may include a second region 242A. For example, the second region 242A may be formed at one end of the second window 242 (e.g., the end of the second window 242 facing the negative y-axis direction).

In an embodiment, the first region 232A and the second region 242A may be black matrix regions, which are regions where the screen is not displayed on the display 230 and 240.

In an embodiment, the coil 250 may be arranged in a space surrounded by the first region 232A, the second region 242A, and the side surface 210A of the first housing 210. For example, the side surface 210A of the housing 210 may be located in the negative y-axis direction relative to the coil 250. The first region 232A may be located in the negative z-axis direction relative to the coil 250, and the second region 242A may be located in the positive z-axis direction relative to the coil 250.

In an embodiment, the coil 250 may be electrically connected to a printed circuit board 270. For example, the coil 250 may be electrically connected to a printed circuit board 270 located in one direction (e.g., the positive y-axis direction) of the coil 250 to receive power.

In an embodiment, the coil 250 may serve to radiate power outside the electronic device 200. The coil 250 may include a material capable of radiating power.

In an embodiment, the input device 300 may be attached to the first region 232A, the second region 242A, and/or the side surface 210A of the housing 210. For example, the input device 300 may be attached in the opposite direction to the direction in which the coil 250 is arranged in the first region 232A. The input device 300 may be attached in the opposite direction to the direction in which the coil 250 is arranged in the second region 242A. The input device 300 may be attached to the side surface 210A of the first housing 210 in the opposite direction from the direction in which the coil 250 is arranged.

In an embodiment, the electronic device 200 can transmit power to the input device 300 arranged on the first region 232A, the second region 242A, and/or the side surface 210A of the housing 210 of the electronic device 200. The electronic device 200 can transmit power to the input device 300 arranged on the first region 232A, the second region 242A, and/or the side surface 210A of the housing 210 using the coil 250.

In an embodiment, the power transmitted from the electronic device 200 to the input device 300 using the coil 250 can be delivered to a receiving coil 310 located inside the input housing 305 of the input device 300.

In an embodiment, the electronic device 200 may include a Hall sensor (not shown) arranged on a first region 232A, a second region 242A, and a side surface 210A of the first housing 210. The Hall sensor (not shown) may detect a magnetic material 320 included in the input device 300. The electronic device 200 can recognize which surface of the electronic device 200 the input device 300 is attached to through the Hall sensor (not shown).

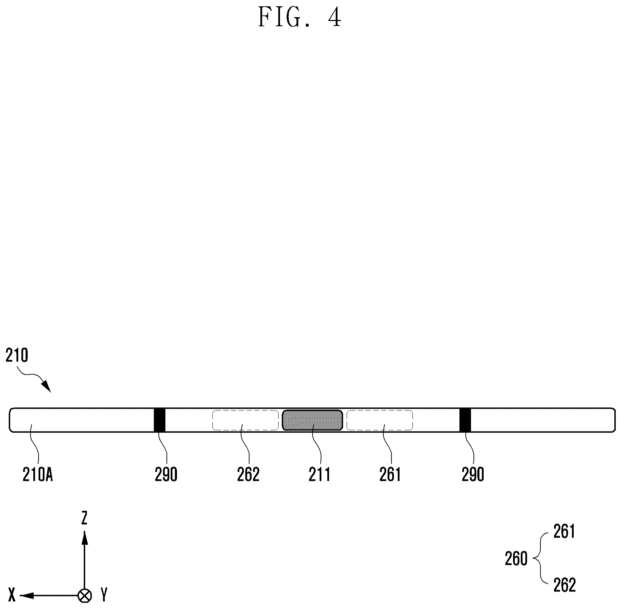

FIG. 4 is a diagram illustrating a side surface 210A of a first housing 210 according to an embodiment of the present disclosure.

FIG. 4 may be a diagram illustrating the detailed configuration arranged on the side surface 210A of the first housing 210. FIG. 4 may be a diagram illusrating a portion of the side surface 210A of the first housing 210 as transparent.

In an embodiment, the first housing 210 may include a decorative element 211. For example, the decorative element 211 may be arranged on the side surface 210A of the first housing 210.

In an embodiment, the side surface 210A of the first housing 210 may include at least a portion made of a non-conductive material. For example, the decorative element 211 on the side surface 210A of the first housing 210 may be made of a non-conductive material. The decorative element 211 may include a non-conductive material such as plastic.

In an embodiment, the remaining region of the side surface 210A of the first housing 210, excluding the decorative element 211, may be made of a conductive material. For example, the remaining region of the side surface 210A of the first housing 210, excluding the decorative element 211, may be made of a conductive metal.

In an embodiment, the decorative element 211 may be manufactured through an injection molding process. For example, the decorative element 211 may be manufactured by injecting liquid plastic material into a mold and allowing it to harden into a predetermined shape.

In an embodiment, the coil 250 (see FIG. 3) may be arranged at the position where the decorative element 211 is formed.

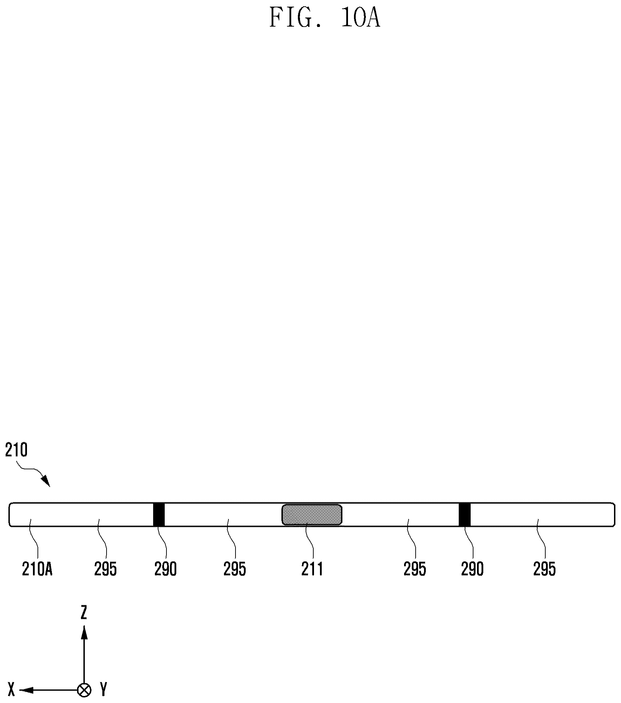

In an embodiment, the antenna segmentation portion 290 may be arranged on the side surface 210A of the first housing 210. The antenna segmentation portion 290 may serve to adjust the length of the antenna 295 (see FIG. 10a) arranged on the electronic device 200. For example, the antenna 295 (see FIG. 10a) formed on the side surface 210A of the first housing 210 may be separated by the antenna segmentation portion 290 and have a predetermined length.

In an embodiment, the magnetic material 260 may be arranged at a position that does not overlap the decorative element 211. For example, the position where the magnetic material 260 is arranged based on the width direction (e.g., x-axis direction) of the electronic device 200 may be a position shifted in the width direction relative to the position of the decorative element 211.

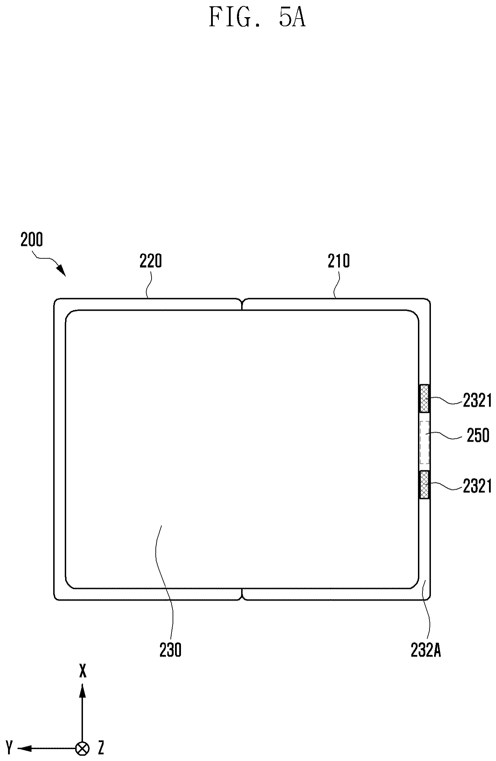

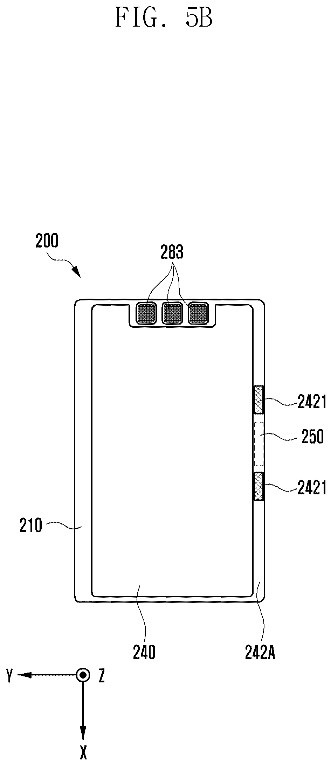

FIGS. 5a and 5b are diagrams illustrating an electronic device 200 according to an embodiment of the present disclosure.

FIG. 5a is a diagram illustrating the first display 230 in the unfolded state of the electronic device 200. FIG. 5b is a diagram illustrating the second display 240 in the folded state of the electronic device 200.

In an embodiment, the electronic device 200 may include a first attachment detection region 2321 and/or a second attachment detection region 2421.

In an embodiment, the first region 232A of the first display 230 may include a first attachment detection region 2321.

In an embodiment, the second region 242A of the second display 240 may include a second attachment detection region 2421.

In an embodiment, the first display 230 and the second display 240 may include regions for detecting contact. The regions for detecting contact may detect external contact with the displays 230 and 240 through touch sensors (not shown).

In an embodiment, the first attachment detection region 2321 may be a region formed by extending the contact detection region on the first display 230 onto the first region 232A. The first attachment detection region 2321 may detect external contact through a touch sensor (not shown).

In an embodiment, the second attachment detection region 2421 may be a region formed by extending the contact detection region on the second display 240 onto the second region 242A. The second attachment detection region 2421 may detect external contact through a touch sensor (not shown).

In an embodiment, when the input device 300 is attached to the first region 232A, the electronic device 200 may recognize the contact of the input device 300 in the first attachment detection region 2321 and determine that the input device 300 is attached to the first region 232A.

In an embodiment, when the input device 300 is attached to the second region 242A, the electronic device 200 may recognize the contact of the input device 300 in the second attachment detection region 2421 and determine that the input device 300 is attached to the second region 242A.

In an embodiment, the electronic device 200 can determine the position of the surface to which the input device 300 is attached based on changes in the impedance of the first attachment detection region 2321, the second attachment detection region 2421, and the coil 250. For example, the electronic device 200 can determine that the input device 300 is attached to the first region 232A when the impedance of the coil 250 changes and contact is detected in the first attachment detection region 2321. The electronic device 200 can determine that the input device 300 is attached to the second region 242A when the impedance of the coil 250 changes and contact is detected in the second attachment detection region 2421. The electronic device 200 can determine that the input device 300 is attached to the side surface 210A of the first housing 210 when the impedance of the coil 250 changes and no contact is detected in the first attachment detection region 2321 and the second attachment detection region 2421.

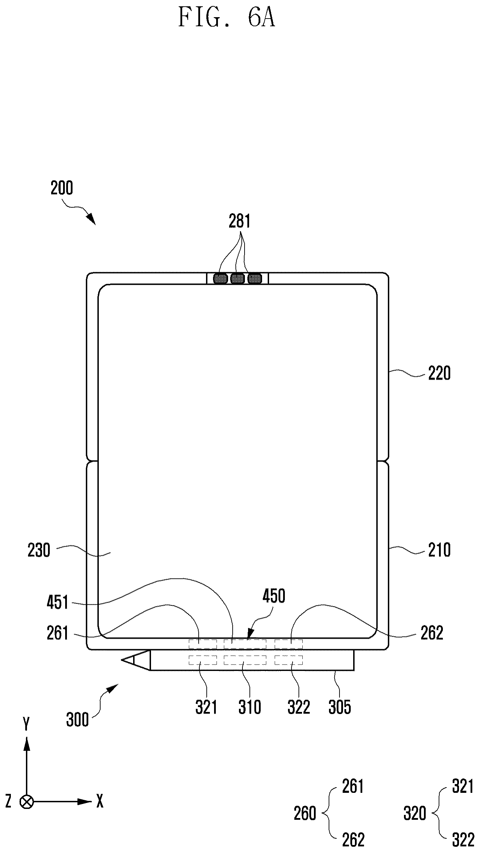

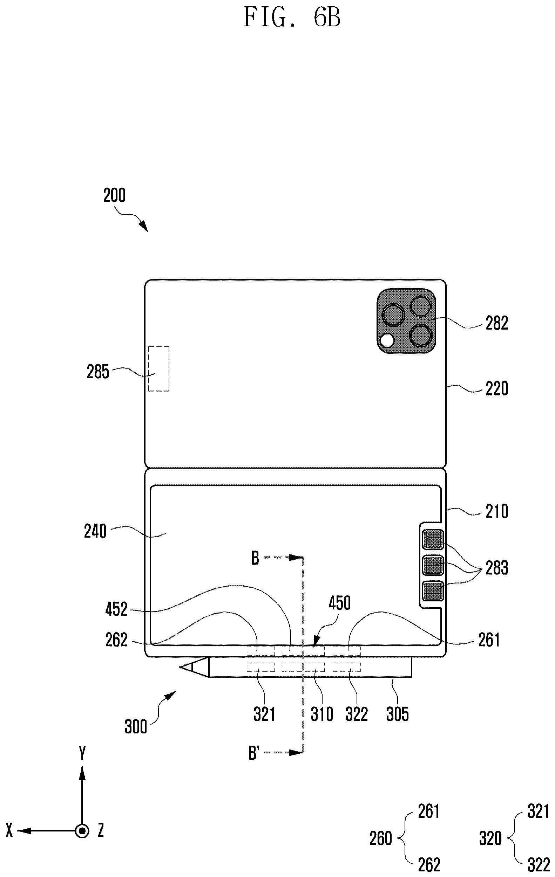

FIGS. 6a and 6b are diagrams illustrating an electronic device 200 including a coil 450 according to an embodiment of the present disclosure.

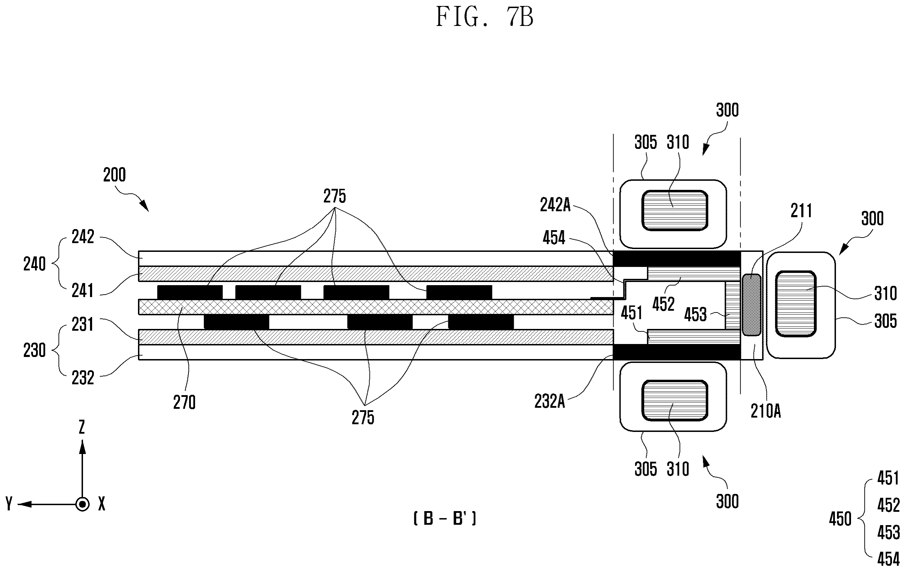

The electronic device 200 according to an embodiment of the present disclosure may include a coil 450. The coil 450 may include a first coil 451, a second coil 452, and/or a third coil 453 (see FIG. 7b).

In an embodiment, the first coil 451, the second coil 452, and the third coil 453 (see FIG. 7b) may each be arranged on different surfaces of the electronic device 200.

With reference to FIG. 6a, the first coil 451 may be arranged on the first region 232A of the first display 230. For example, the first coil 451 may be arranged on the surface of the first display 230 that faces the interior of the electronic device 200 in the first region 232A.

With reference to FIG. 6b, the second coil 452 may be arranged on the second region 242A of the second display 240. For example, the second coil 452 may be arranged on the surface of the second display 240 that faces the interior of the electronic device 200 in the second region 242A.

In an embodiment, the magnetic material 260 may include a first magnetic material 261 and/or a second magnetic material 262. The first magnetic material 261 and the second magnetic material 262 may be arranged symmetrically with respect to the coil 450. For example, the first magnetic material 261 may be arranged at a distance from the coil 450 in one direction of the coil 450. The second magnetic material 262 may be arranged at a distance from the coil 450 in the other direction of the coil 450.

In an embodiment, the input device 300 may be attached to one side surface of the electronic device 200. For example, the input device 300 may be attached to the side surface of the electronic device 200 facing the negative y-axis direction.

In an embodiment, the input device 300 may include an input housing 305, a receiving coil 310, and/or an attachment magnetic material 320.

In an embodiment, the input housing 305 may form the exterior of the input device 300. The receiving coil 310 and the attachment magnetic material 320 may be arranged inside the input housing 305. The receiving coil 310 and the attachment magnetic material 320 may be surrounded by the input housing 305.

In an embodiment, the input device 300 may be attached to the electronic device 200 through the attractive force acting between the magnetic material 260 and the attachment magnetic material 320.

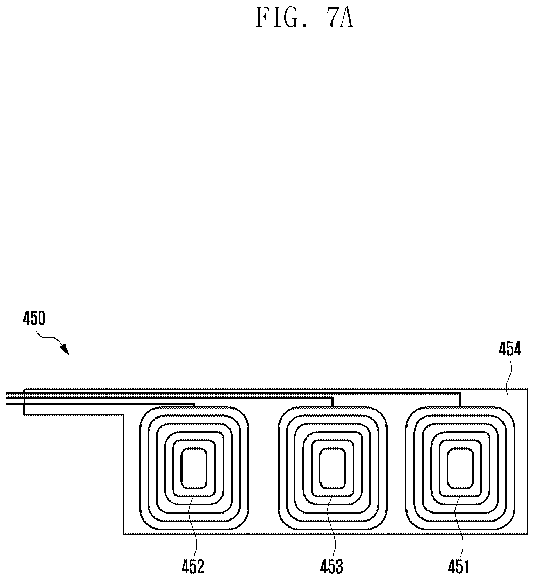

FIGS. 7a and 7b are diagrams illustrating a coil 450 and an electronic device 200 including the coil according to an embodiment of the present disclosure.

FIG. 7a is a diagram illustrating a coil 450 according to an embodiment. FIG. 7b is a diagram illustrating an electronic device 200 including a coil 450 according to an embodiment. FIG. 7b may be a diagram illustrating the electronic device 200 as viewed from the B-B' cross-section shown in FIG. 6b.

With reference to FIG. 7a, the coil 450 according to an embodiment of the present disclosure may include a first coil 451, a second coil 452, a third coil 453, and/or a flexible printed circuit board 454.

In an embodiment, the first coil 451, the second coil 452, and the third coil 453 may each be arranged on the flexible printed circuit board 454.

In an embodiment, the flexible printed circuit board 454 may be bent and extended at least in part. For example, with reference to FIG. 7b, a portion of the flexible printed circuit board 454 may extend in a direction parallel to the first region 232A and the second region 242A. A portion of the flexible printed circuit board 454 may extend in a direction parallel to the side surface 210A of the housing 210. The flexible printed circuit board 454 may extend in a direction parallel to the first region 232A and the second region 242A and then bend and extend in a direction parallel to the side surface 210A of the housing 210.

With reference to FIG. 7b, the first coil 451 may be arranged to face the first region 232A. The second coil 452 may be arranged to face the second region 242A. The third coil 453 may be arranged to face the side surface 210A of the housing 210.

With reference to FIG. 7b, the input device 300 may be attached to the first region 232A, the second region 242A, and/or the side surface 210A of the housing 210.

In an embodiment, the electronic device 200 can determine the position where the input device 300 is attached by detecting changes in the impedance of each coil 451, 452, and 453, and can transmit power to the input device 300 using the coils 451, 452, and 453 located near the input device 300. For example, when the input device 300 is arranged in the first region 232A, the electronic device 200 detects changes in the impedance of the first coil 451 and can transmit power to the input device 300 using the first coil 451. When the input device 300 is attached to the second region 242A, the electronic device 200 can detect changes in the impedance of the second coil 452 and transmit power to the input device 300 using the second coil 452. When the input device 300 is attached to the side surface 210A of the housing 210, the electronic device 200 can detect changes in the impedance of the third coil 453 and transmit power to the input device 300 using the third coil 453.

In an embodiment, the power transmitted from the electronic device 200 to the input device 300 using the coil 450 can be delivered to the receiving coil 310 located inside the input housing 305 of the input device 300.

The electronic device 200 according to an embodiment, which includes the coil 450, can prevent or reduce unnecessary power consumption by using only one of the three coils 451, 452, and 453 to transmit power to the input device 300.

In an embodiment, the electronic device 200 can determine the position where the input device 300 is attached by detecting changes in the impedance of each coil 451, 452, and 453 and display the position where the input device 300 is attached to the user of the electronic device 200. For example, when the input device 300 is attached to the first region 232A, the electronic device 200 can determine that the input device 300 is attached to the first region 232A by detecting changes in the impedance of the first coil 451 located near the first region 232A, and display the position of the input device 300 to the user. The electronic device 200 can notify the user of the position of the input device 300 by displaying it on the display 230 and 240.

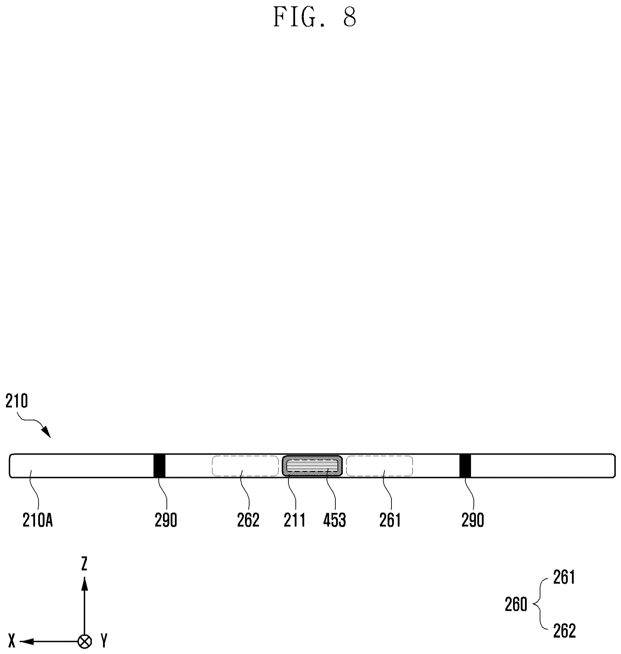

FIG. 8 is a diagram illustrating a side surface 210A of a first housing 210 according to an embodiment of the present disclosure.

FIG. 8 may be a diagram illustrating the detailed configuration arranged on the side surface 210A of the first housing 210. FIG. 8 may be a diagram illustrating a portion of the side surface 210A of the first housing 210 as transparent.

In an embodiment, the first housing 210 may include a decorative element 211. For example, the decorative element 211 may be arranged on the side surface 210A of the first housing 210.

In an embodiment, the decorative element 211 shown in FIG. 8 may be substantially the same as the decorative element 211 shown in FIG. 4. The decorative element 211 may be made of a non-conductive material.

In an embodiment, the antenna segmentation portion 290 may be arranged on the side surface 210A of the first housing 210.

In an embodiment, the magnetic material 260 may be arranged at a position not overlapping the decorative element 211. For example, the positions where the first magnetic material 261 and the second magnetic material 262 are arranged based on the width direction (e.g., the x-axis direction) of the electronic device 200 may be positions shifted in the width direction relative to the position of the decorative element 211.

In an embodiment, the third coil 453 may be arranged at a position overlapping the decorative element 211. For example, the third coil 453 may be arranged at a position on the side surface 210A of the first housing 210 where the decorative element 211 is formed. Since the decorative element 211 is formed from a non-conductive material, the third coil 453 can transmit power to the input device 300 (see FIG. 7b) without being affected by the decorative element 211.

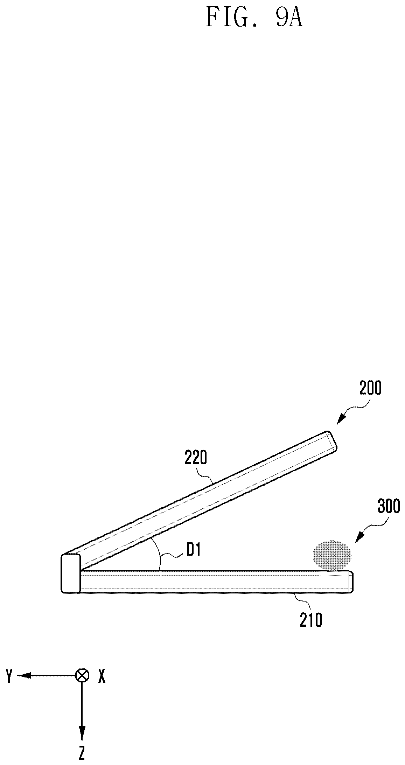

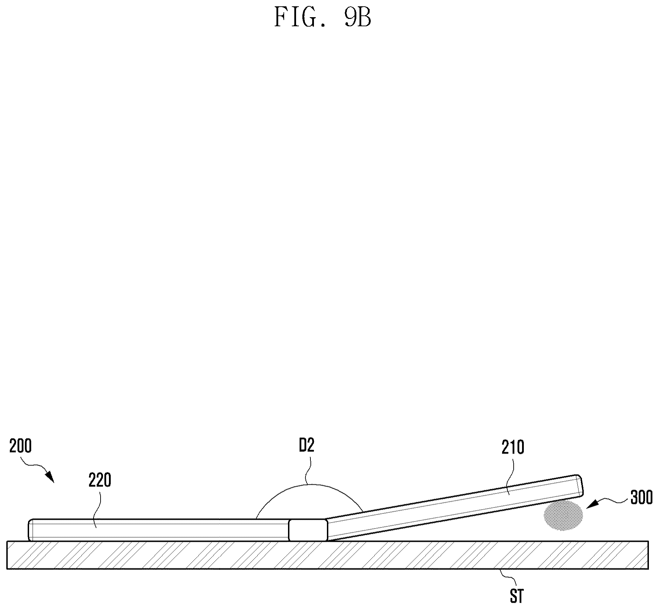

FIGS. 9a and 9b are diagrams illustrating the electronic device 200 according to an embodiment of the present disclosure in a state where it is folded or unfolded to an angle greater than or less than a predetermined angle.

FIG. 9a is a diagram illustrating the electronic device 200 according to an embodiment folded at a first angle D1. FIG. 9b is a diagram illustrating the electronic device 200 according to an embodiment unfolded at a second angle D2.

With reference to FIG. 9a, the first housing 210 and the second housing 220 can be folded such that one surface of the first housing 210 and one surface of the second housing 220 come close to each other.

When the first housing 210 and the second housing 220 are folded so that they face each other with the input device 300 attached to one side of the first housing 210, the second housing 220 may come into contact with the input device 300, potentially damaging the electronic device 200 and the input device 300.

With reference to FIGS. 9a and 9b, the input device 300 may be attached to one direction of the first housing 210 or the other direction of the first housing 210. One direction of the first housing 210 may refer to the negative z-axis direction relative to the first housing 210. The other direction of the first housing 210 may refer to the positive z-axis direction relative to the first housing 210.

In an embodiment, a first display 230 (see FIG. 2a) may be arranged on one surface of the first housing 210. FIG. 9a may be a diagram illustrating the input device 300 attached to the first region 232A (see FIG. 3) of the first display 230 (see FIG. 3) located on one surface of the first housing 210.

In an embodiment, a second display 240 (see FIG. 2a) may be attached to the other side of the first housing 210. FIG. 9b may be a diagram illustrating the state where the input device 300 is attached to the second region 242A (see FIG. 3) of the second display 240 (see FIG. 3) located on the other side of the first housing 210.

In an embodiment, to prevent damage to the electronic device 200 and the input device 300 because of the folding of the first housing 210 and the second housing 220, the electronic device 200 may be configured to provide a notification when the first housing 210 and the second housing 220 are folded below a predetermined angle while the input device 300 is attached to one direction of the first housing 210 (e.g., as shown in FIG. 9a). For example, the electronic device 200 may provide a notification to the user of the electronic device 200 when the first housing 210 and the second housing 220 are folded below a first angle D1 while the input device 300 is attached to one direction of the first housing 210.

In an embodiment, the notification provided to the user of the electronic device 200 may be provided in the form of being displayed in a display 230 and 240 (see FIG. 3).

In an embodiment, the notification provided to the user of the electronic device 200 may be provided in the form of vibration of the electronic device 200 or sound generated by the electronic device 200.

With reference to FIG. 9b, the first housing 210 and the second housing 220 can be unfolded such that one surface of the first housing 210 and one surface of the second housing 220 are moved apart from each other.

When the first housing 210 and the second housing 220 are unfolded while the input device 300 is attached to the other direction of the first housing 210, the input device 300 may be located between the electronic device 200 and an external structure ST (e.g., a bottom surface on which the electronic device 200 is arranged). This may lead to the input device 300 contacting the external structure ST, potentially damaging the electronic device 200 and the input device 300.

In an embodiment, to prevent damage to the electronic device 200 and the input device 300 because of the unfolding of the first housing 210 and the second housing 220, the electronic device 200 may be configured to provide a notification when the first housing 210 and the second housing 220 are unfolded beyond a predetermined angle while the input device 300 is attached to the other direction of the first housing 210 (e.g., as shown in FIG. 9a). For example, the electronic device 200 may provide a notification to the user of the electronic device 200 when the first housing 210 and the second housing 220 are unfolded beyond a second angle D2 while the input device 300 is attached to the other direction of the first housing 210.

In an embodiment, the notification provided to the user of the electronic device 200 may be provided in the form of being displayed in a display 230 and 240 (see FIG. 3).

In an embodiment, the notification provided to the user of the electronic device 200 may be provided in the form of vibration of the electronic device 200 or sound generated by the electronic device 200.

In an embodiment, the electronic device 200 may provide a notification to the user under the control of a processor (e.g., the processor 120 of FIG. 1).

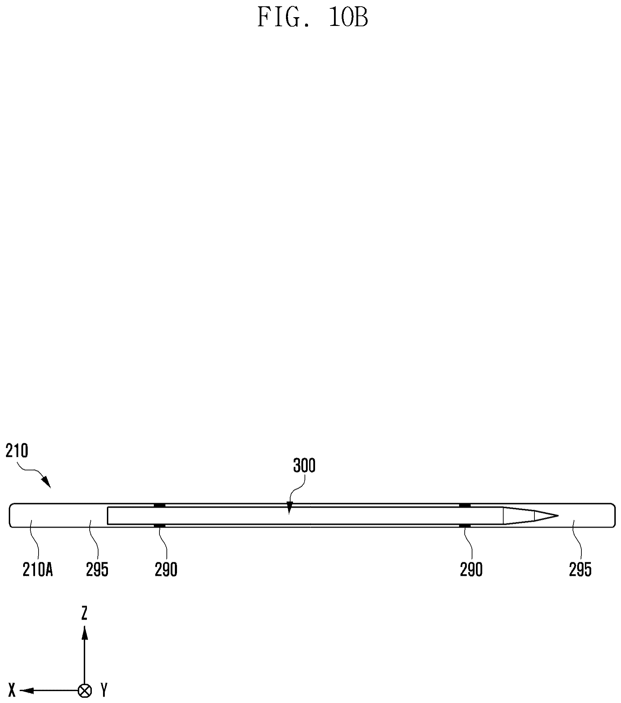

FIGS. 10a and 10b are diagrams illustrating the side surface 210A of the first housing 210 and the input device 300 arranged on the side surface 210A of the first housing 210 according to an embodiment of the present disclosure.

FIG. 10a is a diagram illustrating the side surface 210A of the first housing 210 according to an embodiment. FIG. 10b is a diagram illustrating the input device 300 attached to the side surface 210A of the first housing 210 according to an embodiment.

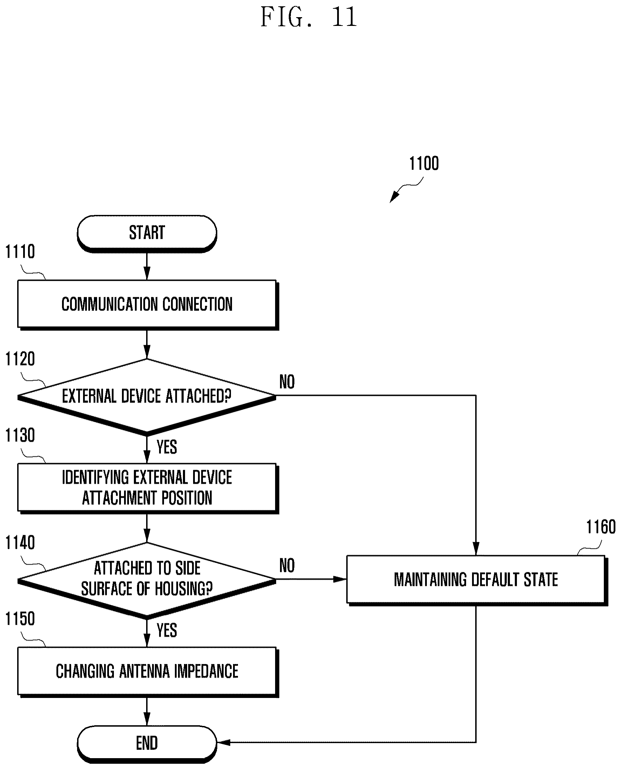

FIG. 11 is a flowchart of an antenna impedance change method 1100 based on the attachment of an input device 300 according to an embodiment of the present disclosure.

With reference to FIG. 10a, the side surface 210A of the first housing 210 may include at least one antenna 295. For example, the side surface 210A of the first housing 210 may be formed as a frame including antennas 295 for wireless communication.

With reference to FIG. 10a, each antenna 295 may be arranged with an antenna segmentation portion 290 in between. The antenna segmentation portion 290 may serve to adjust the length of the antenna 295 formed on the side surface 210A of the first housing 210.

With reference to FIG. 10b, an input device 300 may be attached to the side surface 210A of the first housing 210. When the input device 300 is attached to the side surface 210A of the first housing 210, the input device 300 may come into contact with the antenna 295 and the antenna segmentation portion 290, potentially degrading the performance of the antenna 295.

In an embodiment, the electronic device 200 may change the impedance of the antenna 295 to prevent performance degradation of the antenna 295 caused by the input device 300 attached to the side surface 210A of the first housing 210. For example, with reference to FIG. 11, the electronic device 200 can perform operations according to the antenna impedance change method 1100 to change the impedance of the antenna 295.

In an embodiment, the antenna impedance change method 1100 may be performed, for example, according to the flowchart shown in FIG. 11. The flowchart shown in FIG. 11 is merely a flowchart according to an embodiment of the antenna impedance change method 1100, so the order of each operation may be changed or performed simultaneously.

In an embodiment, each operation of the antenna impedance change method 1100 may be performed by a processor (e.g., the processor 120 of FIG. 1) of the electronic device 200, or by a wireless communication module (e.g., the wireless communication module 192 of FIG. 1) and/or a sensor module (e.g., at least one of the sensor modules 176 in FIG. 1).

With reference to FIG. 11, the antenna impedance change method 1100 may include an operation of connecting communication through the antenna 295 (1110), an operation of identifying whether an external device (e.g., an input device 300) is attached (1120), an operation of identifying the position where the external device is attached (1130), an operation of identifying whether an external device is attached to the side surface 210A of the housing 210 (1140), an operation of changing the impedance of the antenna 295 (1150), and/or an operation of maintaining the default state of the electronic device 200 (1160).

In an embodiment, in an operation of connecting the communication (1110), the electronic device 200 may be connected to wireless communication through the antenna 295.

In an embodiment, wireless communication through the antenna 295 may be affected by an input device 300 arranged at a position corresponding to the antenna 295.

In an embodiment, the external device may refer to an input device 300 attached to the electronic device 200.

The electronic device 200 according to an embodiment may, under the control of the processor 120, determine whether the input device 300 is attached to the electronic device 200 in an operation of identifying the external device attachment (1120).

In an embodiment, the electronic device 200 may, under the control of the processor 120, identify the attachment position of the input device 300 in an operation of identifying the position where the external device is attached (1130). The electronic device 200 may determine the specific position on the electronic device 200 where the input device 300 is attached. For example, the electronic device 200 can determine whether the input device 300 is attached to the first region 232A, the second region 242A, or the side surface 210A of the first housing 210.

In an embodiment, the electronic device 200 can determine whether the input device 300 is attached to the side surface 210A of the first housing 210 in the housing side surface attachment identification operation (1140) under the control of the processor 120.

In an embodiment, the electronic device 200 may identify whether the input device 300 is attached and its attachment position through a Hall sensor or a touch sensor in an external device attachment identification operation (1120), an external device attachment position identification operation (1130), and a housing side surface attachment identification operation (1140), or may identify whether the input device 300 is attached and its attachment position using impedance changes of coils 250 and 450.

In an embodiment, the electronic device 200 may change the impedance of the antenna 295 in the antenna impedance chang operation (1150) under the control of the processor 120. The electronic device 200 may change the impedance of the antenna 295 only when it is identified that the input device 300 is attached to the side surface 210A of the first housing 210 in the housing side surface attachment identification operation (1140).

When the input device 300 is attached to the side surface 210A of the first housing 210, the performance of the antenna 295 may be degraded because of the influence of the input device 300. According to an embodiment, the electronic device 200 can prevent or reduce the performance degradation of the antenna 295 caused by the input device 300 by changing the impedance of the antenna 295 in the antenna impedance change operation (1150).

In an embodiment, the electronic device 200 may use an internal device of the antenna 295 or a device connected separately from the antenna 295 to change the impedance of the antenna 295 during the antenna impedance change operation (1150). For example, the electronic device 200 may change the impedance of the antenna 295 through a switch in the antenna 295 itself. Alternatively, the electronic device 200 may change the impedance of the antenna 295 through a tuner (not shown) electrically connected to the antenna 295.

In an embodiment, the electronic device 200 may, in the antenna impedance change operation (1150), change the antenna 295 being used for the communication connection to another antenna 295 that is not affected by the input device 300. For example, the electronic device 200 may use an antenna 295 that is not in contact with the input device 300 to establish a communication connection during the antenna impedance change operation (1150).

According to an embodiment, the electronic device 200 may, under the control of the processor 120, maintain the antenna 295 of the electronic device 200 in a default state during the default state maintenance operation (1160). The default state of the antenna 295 may refer to a state where the impedance of the antenna 295 is maintained without being changed. In the input device attachment identification operation (1120), in the case that the electronic device 200 determines that the input device 300 is not attached to the electronic device 200, it can maintain the default state of the antenna 295 of the electronic device 200 without changing the impedance of the antenna 295 through the default state maintenance operation (1160). The electronic device 200 may determine that the input device 300 is not attached to the side surface 210A of the housing 210 in the housing side surface attachment identification operation (1140) and may maintain the default state without changing the impedance of the antenna 295 through the default state maintenance operation (1160).

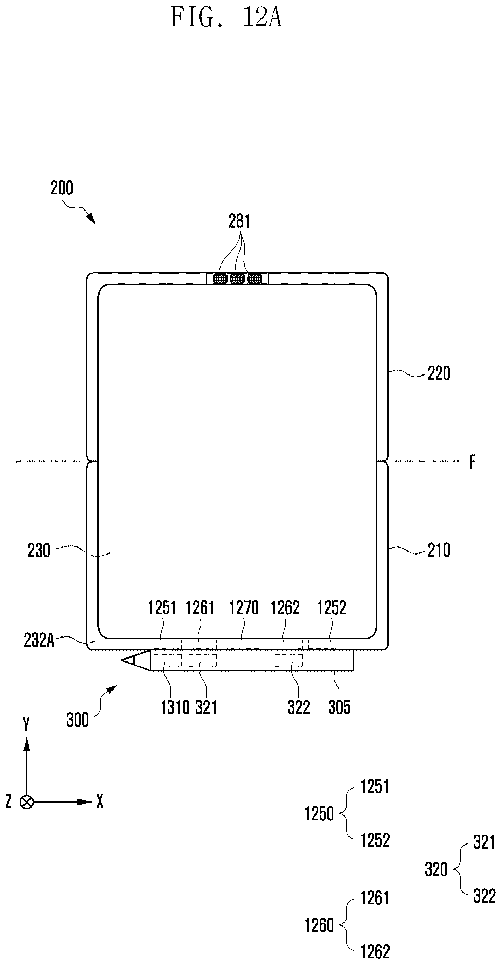

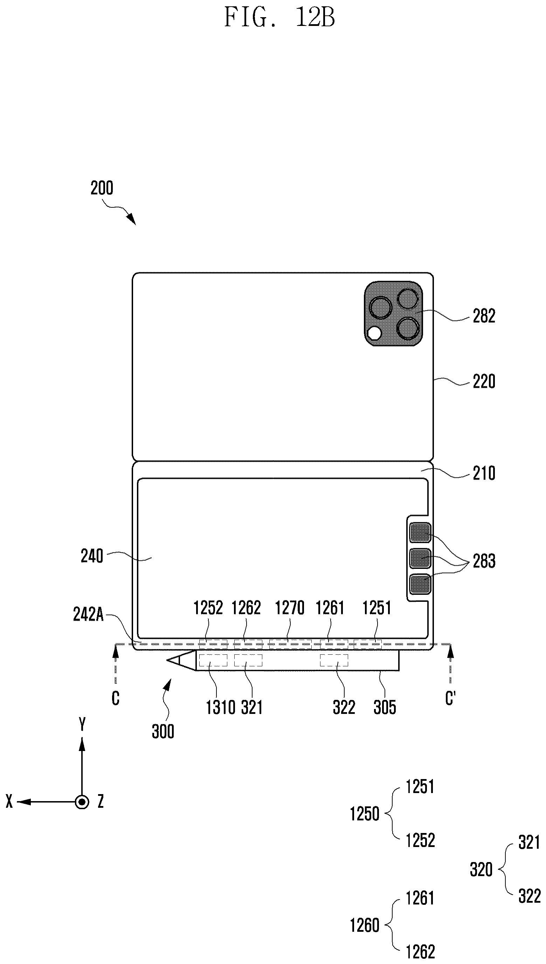

FIGS. 12a and 12b are diagrams illustrating an electronic device 200 including a connection device 1270 according to an embodiment of the present disclosure.

The electronic device 200 illustrated in FIGS. 12a and 12b may refer to the electronic device 200 shown in FIG. 2a or may include at least a portion of the electronic device 200 shown in FIG. 2a. Descriptions of configurations identical to those shown in FIG. 2a may be omitted.

In an embodiment, the electronic device 200 may include a connection device 1270. The connection device 1270 may be a connector that physically connects the electronic device 200 to an external device. For example, the connection device 1270 may include an HDMI connector, a USB connector, an SD card connector, or an audio connector (e.g., a headphone connector).

In an embodiment, the connection device 1270 may be arranged at the end portion of the electronic device 200. For example, the connection device 1270 may be arranged at the end portion located in the negative y-axis direction of the electronic device 200. The connection device 1270 may be arranged centrally based on the width direction of the electronic device 200.

With reference to FIGS. 12a and 12b, the connection device 1270 may be arranged such that it is surrounded by a first region 232A and a second region 242A.

In an embodiment, the coil 1250 may include a first coil 1251 and/or a second coil 1252.

In an embodiment, the magnetic material 1260 may include a first magnetic material 1261 and/or a second magnetic material 1262.

In an embodiment, the two coils 1250 and the two magnetic materials 1260 may be arranged in symmetrical positions relative to the connection device 1270. For example, the first coil 1251 and the first magnetic material 1261 may be located in one direction (e.g., the negative x-axis direction) of the connection device 1270. The second coil 1252 and the second magnetic material 1262 may be located on the other side of the connection device 1270 (e.g., the positive x-axis direction).

In an embodiment, the input device 300 may be attached to one side surface of the electronic device 200. For example, the input device 300 may be attached to a side surface of the electronic device 200 facing the negative y-axis direction.

In an embodiment, the input device 300 may include an input housing 305, a receiving coil 1310, and/or an attachment magnetic material 320.

In an embodiment, the input housing 305 may form the exterior of the input device 300. The receiving coil 1310 and attachment magnetic material 320 may be arranged inside the input housing 305. The receiving coil 1310 and the attachment magnetic material 320 may be surrounded by the input housing 305.

In an embodiment, the receiving coil 1310 of the input device 300 may receive power from the coil 1250 of the electronic device 200. In an embodiment, the attachment magnetic material 320 may include a first attachment magnetic material 321 and/or a second attachment magnetic material 322.

In an embodiment, the receiving coil 1310 of the input device 300 may be arranged at one end of the input device 300. When the input device 300 is attached to the electronic device 200, the receiving coil 1310 may be located to correspond with the first coil 1251 or the second coil 1252 of the electronic device 200. The receiving coil 1310 may receive power from the first coil 1251 or the second coil 1252.

In an embodiment, when the input device 300 is attached to the electronic device 200, the attachment magnetic material 320 may be located in correspondence with the first magnetic material 1261 or the second magnetic material 1262 of the electronic device 200. The input device 300 may be fixed in position on the electronic device 200 through the attractive force between the attachment magnetic material 320 and the first magnetic material 1261 and the attractive force between the attachment magnetic material 320 and the second magnetic material 1262.

The electronic device 200 in FIGS. 12a and 12b may be formed with the coil 1250 arranged differently from the electronic device 200 in FIGS. 2a and 2b. For example, the electronic device 200 shown in FIGS. 2a and 2b may have the coil 250 located between two magnetic materials 260, whereas the electronic device 200 shown in FIGS. 12a and 12b may have the coil 1250 located in the opposite direction between two magnetic materials 1260.

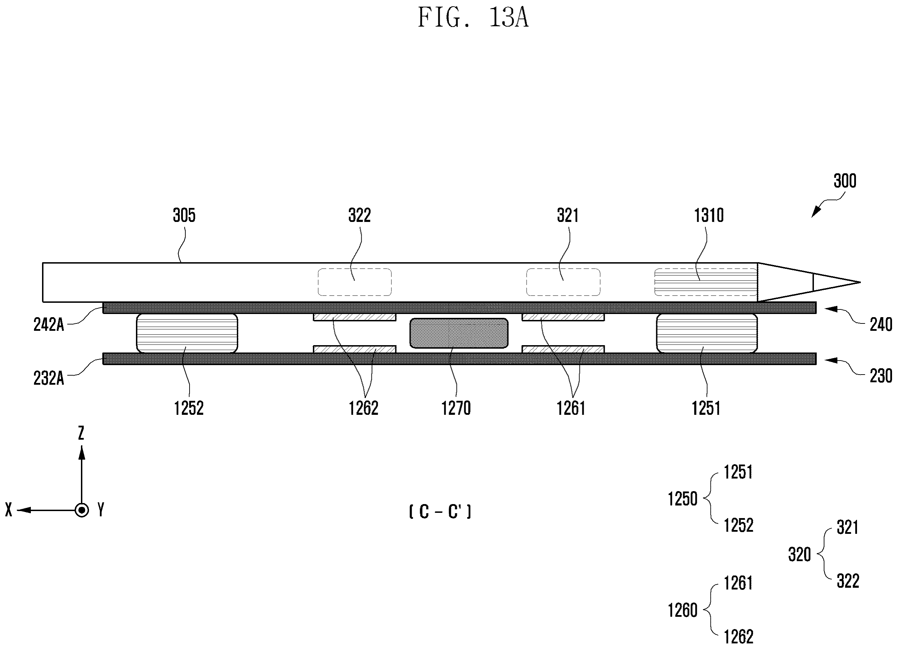

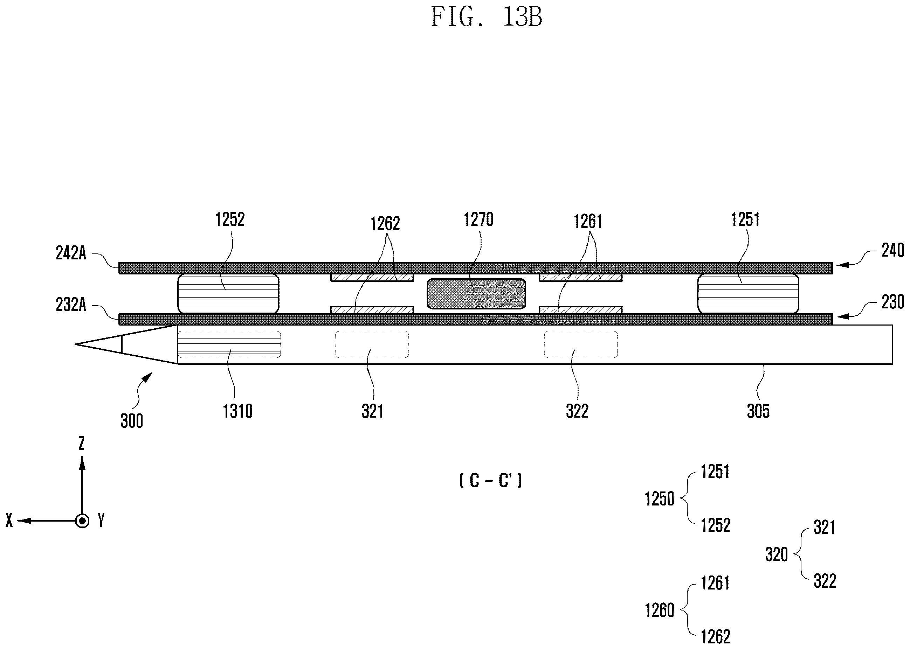

FIGS. 13a and 13b are diagrams illustrating an electronic device 200 including a connection device 1270 and an input device 300 according to an embodiment of the present disclosure.

FIGS. 13a and 13b may be diagrams illustrating the electronic device 200 as viewed from the C-C' cross-section shown in FIG. 12b.

With reference to FIGS. 13a and 13b, the coil 1250, magnetic material 1260, and connection device 1270 may be arranged between the first region 232A of the first display 230 and the second region 242A of the second display 240.

With reference to FIGS. 13a and 13b, the two coils and two magnetic materials 1260 may be arranged in symmetrical positions relative to the connection device 1270. For example, the first coil 1251 and the first magnetic material 1261 may be arranged on one side of the connection device 1270. The second coil 1252 and the second magnetic material 1262 may be arranged on the other side of the connection device 1270.

With reference to FIGS. 13a and 13b, the first coil 1251 may be located at a distance from the first magnetic material 1261 in one direction (e.g., the negative x-axis direction) of the first magnetic material 1261. The second coil 1252 may be located at a distance from the second magnetic material 1262 in the other direction (e.g., the positive x-axis direction) of the second magnetic material 1262.

With reference to FIG. 13a, the input device 300 may be attached to the second region 242A of the second display 240.

In an embodiment, the receiving coil 1310 and the attachment magnetic material 320 may be arranged inside the housing 305 of the input device 300. The receiving coil 1310 and the attachment magnetic material 320 may be surrounded by the input housing 305. The receiving coil 1310 may be arranged at the end portion of the housing 305.

In an embodiment, when the input device 300 is attached to the second region 242A, the receiving coil 1310 of the input device 300 may be arranged at a position overlapping the first coil 1251. The first attachment magnetic material 321 and the second attachment magnetic material 322 may each be arranged at a position overlapping the first magnetic material 1261 or the second magnetic material 1262.

In FIG. 13a, the direction in which the input device 300 is attached is an illustrative example for explanatory purposes, and the input device 300 may also be attached in the opposite direction. For example, the input device 300 may be attached to the second region 242A such that the receiving coil 1310 overlaps the second coil 1252.

With reference to FIG. 13b, the input device 300 may be attached to the first region 232A of the first display 230.

In an embodiment, when the input device 300 is attached to the first region 232A, the receiving coil 1310 of the input device 300 may be arranged to overlap the second coil 1252. The first attachment magnetic material 321 and the second attachment magnetic material 322 may each be arranged at a position overlapping the first magnetic material 1261 or the second magnetic material 1262.

In FIG. 13b, the direction in which the input device 300 is attached is an illustrative example for explanatory purposes, and the input device 300 may also be attached in the opposite direction. For example, the input device 300 may be attached to the first region 232A such that the receiving coil 1310 overlaps the first coil 1251.

In an embodiment, the input device 300 may receive power from the first coil 1251 or the second coil 1252 of the electronic device 200 through the receiving coil 1310.

In an embodiment, the input device 300 may be attached to at least a portion of the electronic device 200 using the attractive force between the magnetic material 1260 and the attachment magnetic materials 321 and 322.

With reference to FIGS. 13a and 13b, the position of the receiving coil 1310 in the input device 300 may be formed differently from the position of the receiving coil 310 in the input device 300 shown in FIG. 2a. For example, in the input device 300 of FIGS. 13a and 13b, the receiving coil 1310 may be located closer to the end portion of the input device 300 compared to the receiving coil 310 in FIG. 2a.

An electronic device 200 according to an embodiment of the present disclosure may include a first housing 210, a second housing 220, a first display 230, a second display 240, a magnetic material 260, and a coil 250.

In an embodiment, the second housing 220 may be rotatably connected to the first housing about a folding axis F.

In an embodiment, the first display 230 may be arranged on one surface of the first housing 210 and one surface of the second housing 220 and may be foldable.

In an embodiment, the second display 240 may be arranged on the other surface of the first housing 210.

In an embodiment, the magnetic material 260 may attach the input device 300 to the electronic device 200.

In an embodiment, the coil 250 can transmit power to the input device 300.

In an embodiment, the first housing 210 may include a non-conductive region 211 on at least a portion of the side surface 210A of the first housing 210 that is perpendicular to one surface of the first housing 210 and the other surface of the first housing 210 and parallel to the folding axis F.

In an embodiment, the magnetic material 260 and the coil 250 are arranged on the side surface 210A of the first housing 210, the first region 232A of the first display 230, and the second region 242A of the second display 240 located on the opposite side of the first region 232A.

In an embodiment, the coil 250 may be arranged at a position overlapping the non-conductive region 211.

In an embodiment, the first region 232A and the second region 242A may each be connected perpendicularly to the side surface 210A of the first housing 210.

In an embodiment, the magnetic material 260 may include a first magnetic material 261 arranged at a distance from one direction of the coil 250 and a second magnetic material 262 arranged at a distance from the opposite direction of the coil 250.

In an embodiment, the electronic device 200 may further include a battery 189 arranged within at least one of the first housing 210 and the second housing 220.

In an embodiment, the coil 250 may transmit power received from the battery 189 to the input device 300.

In an embodiment, the coil 250 may transmit power to an input device 300 attached to the first region 232A, the second region 242A, or the side surface 210A of the housing 210.

In an embodiment, the coil 450 may include a first coil 451 that transmits power to an input device 300 attached to one surface of the first region 232A, a second coil 452 that transmits power to an input device 300 attached to one surface of the second region 242A, and a third coil 453 that transmits power to an input device 300 attached to the side surface 210A of the first housing 210.

In an embodiment, the coil 450 may further include a flexible printed circuit board 454 on which a first coil 451, a second coil 452, and a third coil 453 are arranged, and which is bent at least in part to extend parallel to the first region 232A, the second region 242A, and the side surface 210A of the first housing 210, respectively.

In an embodiment, the first coil 451 may be arranged on the other surface of the first region 232A, the second coil 452 may be arranged on the other surface of the second region 242A, and the third coil 453 may be arranged on the side surface 210A of the first housing 210 facing the interior of the electronic device 200.

In an embodiment, a processor 120 may be further included, wherein the processor 120 may be configured to recognize the position where the input device 300 is attached to the electronic device 200 based on changes in the impedance of the first coil 451, the second coil 452, and the third coil 453.

In an embodiment, the processor 120 may be configured to transmit power to the input device 300 through the first coil 451 when it recognizes that the position where the input device 300 is attached corresponds to one surface of the first region 232A, may be configured to transmit power to the input device 300 through the second coil 452 when it recognizes that the position where the input device is attached corresponds to one surface of the second region 242A , and may be configured to transmit power to the input device 300 through the third coil 453 when it recognizes that the position where the input device 300 is attached corresponds to the side surface 210A of the first housing.

In an embodiment, the first region 232A may include a first attachment detection region 2321 that recognizes that the input device 300 is arranged in the first region 232A, and the second region 242A may include a second attachment detection region 2421 that recognizes that the input device 300 is arranged in the second region 242A.

In an embodiment, the processor 120 may be configured to display a notification to the user through the display 230 and 240 when the angle between one surface of the first housing 210 and one surface of the second housing 220 is determined to be less than a specified angle while the input device 300 is attached to the first region 232A.

In an embodiment, the processor 120 may be configured to display a notification to the user through the display 230 and 240 when the angle between the first surface of the first housing 210 and the first surface of the second housing 220 is determined to be greater than a specified angle while the input device 300 is attached to the second region 242A.

In an embodiment, the electronic device 200 may further include a processor 120, multiple antennas 295 formed on the side surface 210A of the first housing 210, and an antenna segmentation portion 290 located between the multiple antennas 295.

In an embodiment, the processor 120 may recognize whether an input device 300 is attached to the electronic device 200, identify the position where the input device 300 is attached to the electronic device 200, and change the impedance of the antenna in the case that the input device 300 is attached to the side surface 210A of the first housing 210.

In an embodiment, the electronic device 200 may further include a connection device 1270 for physically connecting the electronic device 200 to an external device.

In an embodiment, the magnetic material 1260 may include a first magnetic material 1261 arranged in one direction of the connection device 1270 and a second magnetic material 1262 arranged in the other direction of the connection device 1270.

In an embodiment, the coil 1250 may include a first coil 1251 arranged in the opposite direction from the direction in which the connection device 1270 is located based on the first magnetic material 1261, and a second coil 1252 arranged in the opposite direction from the direction in which the connection device 1270 is located based on the second magnetic material 1262.

The electronic device 200 according to an embodiment of the present disclosure may include a first housing 210, a second housing 220, a first display 230, a second display 240, an input device 300, a magnetic material 260, and a coil 250.

The electronic device 200 according to an embodiment of the present disclosure may comprise: a first housing 210; a second housing 220 rotatably connected to the first housing about a folding axis F; a first display 230 arranged on one surface of the first housing 210 and one surface of the second housing 220 and being foldable; a second display 240 arranged on the other surface of the first housing 210; an input device 300 attached to the first housing 210; a magnetic material 260 for attaching the input device 300 to the electronic device 200; and a coil 250 for transmitting power to the input device 300, wherein the first housing 210 may include a non-conductive region 211 on at least a portion of the side surface 210A of the first housing 210 perpendicular to the one surface and the other surface of the first housing 210 and formed parallel to the folding axis F, the first housing 210 may include a non-conductive region 211 on at least a portion of the side surface 210A of the first housing 210 formed parallel to the folding axis F, the magnetic material 260 and the coil 250 may be arranged in a space surrounded by the side surface 210A of the first housing 210, a first region 32A of the first display 230, and a second region 242A of the second display 240 located on the opposite side of the first region 232A, and the coil 250 may be arranged at a position overlapping the non-conductive region 211.

In an embodiment, the input device 300 may be attached to the first housing 210.

In an embodiment, the input device 300 may be arranged on the side surface of the first housing 210, the first region 232A, or the second region 242A.

In an embodiment, the input device 300 may include a magnetic material 260, an attachment magnetic material 320 that interacts with the magnetic material 260 through attractive force, and a receiving coil 310 that receives power from the coil 250.

The electronic device according to an embodiment of the present disclosure may be various forms of devices. The electronic device may include, for example, a portable communication device (e.g., a smartphone), a computer device, a portable multimedia device, a portable medical device, a camera, a wearable device, or a home appliance. The electronic device according to the embodiment of the present disclosure is not limited to the aforementioned devices.

The embodiments of the present disclosure and the terms used herein are not intended to limit the technical features described herein to specific embodiments, but should be understood to include various modifications, equivalents, or substitutes of the embodiments. With respect to the description of the drawings, similar or related components may be designated by similar reference numerals. The singular form of a noun corresponding to an item may include one or more of the items unless the context clearly indicates otherwise. In this disclosure, "A or B," "at least one of A and B," "at least one of A or B," "A, B, or C," "at least one of A, B, and C," and "at least one of A, B, or C" may each include any one of the items listed together with the corresponding phrase, or any possible combination thereof. Terms such as "1st", "2nd", or 'first' or "second" may be used simply to distinguish one component from another and do not limit the components in any other respect (e.g., importance or order). When a component (e.g., the first) is mentioned as being "coupled" or "connected" to another component (e.g., the second), with or without the terms 'functionally' or "communicatively," it means that the first component is connected to the second component directly (e.g., by wire), wirelessly, or through a third component.

The term "module" as used in the present disclosure may include a unit implemented in hardware, software, or firmware, and may be used interchangeably with terms such as logic, logic block, component, or circuit. A module may be an integral component or the smallest unit or part thereof that performs one or more functions. For example, according to an embodiment, a module may be implemented in the form of an ASIC (application-specific integrated circuit).

An embodiment of the present disclosure may be implemented as software (e.g., program 140) comprising one or more instructions stored on a storage medium (e.g., an internal memory 136 or an external memory 138) readable by a machine (e.g., an electronic device 101). For example, the processor (e.g., the processor 120) of the device (e.g., the electronic device 101) can call at least one of the stored instructions from the storage medium and execute it. This enables the device to operate to perform at least one function according to the called instruction. The one or more instructions may include code generated by a compiler or code that can be executed by an interpreter. The storage medium readable by the device may be provided in the form of a non-transitory storage medium. Here, "non-transitory" means only that the storage medium is a tangible device and does not contain signals (e.g., electromagnetic waves), and this term does not distinguish between cases where data is stored permanently on the storage medium and cases where it is stored temporarily.

According to an embodiment, the methods according to various embodiments of the present disclosure may be provided in the form of a computer program product. A computer program product may be traded as a commodity between a seller and a buyer. A computer program product may be distributed in the form of a storage medium readable by a device (e.g., a compact disc read-only memory (CD-ROM)), or it may be distributed online (e.g., by download or upload) through an application store (e.g., Play StoreTM) or directly between two user devices (e.g., smartphones). In the case of online distribution, at least part of the computer program product may be temporarily stored or generated on a device-readable storage medium such as the manufacturer's server, the application store's server, or an intermediary server's memory.

According to an embodiment, each of the aforementioned components (e.g., modules or programs) may include one or more objects, and some of the multiple objects may be separated and arranged in other components. According to various embodiments, one or more of the aforementioned components or operations may be omitted, or one or more other components or operations may be added. Alternatively or additionally, multiple components (e.g., modules or programs) may be integrated into a single component. In such a case, the integrated component may perform one or more functions of each of the multiple components in a manner that is identical or similar to that performed by the corresponding component of the multiple components prior to integration.

According to an embodiment, the operations performed by a module, a program, or other component may be executed sequentially, in parallel, repeatedly, or heuristically, or one or more of the operations may be executed in a different order, omitted, or one or more other operations may be added.

## Claims

1. An electronic device 200 comprising:
a first housing 210;
a second housing 220 rotatably connected to the first housing around the folding axis F;
a first display 230 arranged on one surface of the first housing and one surface of the second housing and being foldable;
a second display 240 arranged on the other surface of the first housing;
a magnetic material 260 attaching an input device 300 to the electronic device; and
a coil 250 that transmits power to the input device,
wherein the first housing comprises a non-conductive region 211 on at least portion of the side surface 210A of the first housing formed perpendicular to one surface of the first housing and the other surface of the first housing and parallel to the folding axis,
wherein the magnetic material and the coil are arranged in a space surrounded by the side surface of the first housing, the first region 232A of the first display, and the second region 242A of the second display arranged in the opposite side of the first region, and
wherein the coil is arranged in the position overlapping the non-conductive region.

2. The electronic device of claim 1, wherein
the first region and the second region are, respectively, connected perpendicularly to the side surface of the first housing.

3. The electronic device of claim 1, wherein
the magnetic material comprises the first magnetic material 261 arranged at a distance from one direction of the coil and the second magnetic material 262 arranged at a distance from the other direction opposite to the one direction of the coil.

4. The electronic device of claim 1, further comprising a battery 189 arranged in at least one interior of the first housing and the second housing, wherein
the coil transmits at least a portion of the power received from the battery to the input device.

5. The electronic device of claim 1, wherein
the coil transmits power to the input device attached to the first region, the second region or the side surface of the housing.

6. The electronic device of claim 1, wherein
the coil comprises:
a first coil 451 transmitting power to the input device attached to one surface of the first region;
a second coil 452 transmitting power to the input device attached to one surface of the second region; and
a third coil 453 transmitting power to the input device attached to the side surface of the first housing.

7. The electronic device of claim 6, wherein
the coil 450 further comprises a flexible printed circuit board 454 on which a first coil, a second coil, and a third coil are arranged, and which is bent at least in part to extend parallel to the first region, the second region, and the side surface of the first housing, respectively,
wherein the first coil is arranged in the other surface of the first region,
wherein the second coil is arranged in the other surface of the second region, and wherein the third coil is arranged on the surface facing the interior of the electronic device in the side surface of the first housing.

8. The electronic device of claim 7, further comprising a processor 120, wherein
the processor is configured to recognize the position where the input device is attached to the electronic device based on changes in the impedance of the first coil, the second coil, and the third coil.

9. The electronic device of claim 8, wherein
the processor is configured to
transmit power to the input device through the first coil when it recognizes that the position where the input device is attached corresponds to one surface of the first region,
transmit power to the input device through the second coil when it recognizes that the position where the input device is attached corresponds to one surface of the second region, and
transmit power to the input device through the third coil when it recognizes that the position where the input device is attached corresponds to the side surface of the first housing.

10. The electronic device of claim 1,
wherein the first region comprises a first attachment detection region 2321 recognizing that the input device is arranged in the first region, and
wherein the second region comprises a second attachment detection region 2421 recognizing that the input device is arranged in the second region.

11. The electronic device of claim 1, further comprising a processor 120, wherein
the processor is configured to display a notification to the user through the display when the angle between one surface of the first housing and one surface of the second housing is determined to be less than the predetermined angle in the state where the input device is attached to the first region.

12. The electronic device of claim 1, further comprising a processor 120, wherein
the processor is configured to display a notification to the user through the display when the angle between one surface of the first housing and one surface of the second housing is determined to be greater than the predetermined angle in the state where the input device is attached to the second region.

13. The electronic device of claim 1, further comprising:
a processor 120;
multiple antennas 295 formed on the side surface of the first housing; and
an antenna segmentation portion 290 located between the multiple antennas, wherein
the processor recognizes whether an input device is attached to the electronic device, identifies the position where the input device is attached to the electronic device, and changes the impedance of the antenna in the case that the input device is attached to the side surface of the first housing.

14. The electronic device of claim 1, further comprising a connection device 1270 through which the electronic device and the external device are physically connected.

15. The electronic device of claim 14,
wherein the magnetic material comprises a first magnetic material 1261 arranged in one direction of the connection device and a second material 1262 arranged in the other direction of the connection device, and
wherein the coil comprises a first coil 1251 arranged in the opposite direction from the direction in which the connection device is located based on the first magnetic material, and a second coil 1252 arranged in the opposite direction from the direction in which the connection device is located based on the second magnetic material 1262.
